# EUROPÄISCHE PATENTSCHRIFT

(11) **EP 0 575 793 B1**
(45) Veröffentlichungstag und Bekanntmachung des Hinweises auf die Patenterteilung: **03.01.1996**
(21) Anmeldenummer: 93108988.2
(22) Anmeldetag: 04.06.1993
(51) Int. Cl.: C08F 14/26

(54) **Verfahren zur Herstellung eines Polymerisates des Tetrafluorethylens in wässriger Suspension**
Process for the production of a tetrafluoroethylene polymer in aqueous suspension
Procédé de préparation d'un polymère de tétrafluoréthylène en suspension aqueuse

(30) Priorität: 10.06.1992 DE 4218965
(43) Veröffentlichungstag der Anmeldung: 29.12.1993
(73) Patentinhaber: HOECHST AKTIENGESELLSCHAFT, D-65926 Frankfurt am Main (DE)
(72) Erfinder: Müller, Gerd, Dipl.-Ing. (FH), D-8269 Burgkirchen (DE); Schöttle, Thomas, Dr., D-8263 Burghausen (DE)

(56) Entgegenhaltungen:
- EP-A- 0 030 664
- EP-A- 0 078 660
- DE-A- 2 125 698
- TRANS I CHEM E (CHEM. ENG. RES. DES.) Bd. 69 A4, Juli 1991, Seiten 313 - 320 Z.
- JAWORSKI ET AL. 'An LDA study of turbulent flow in a baffled vessel agitated by a pitched blade turbine'
- Ullmanns Encyklopädie der technischen Chemie, 3. Auflage, 1. Band, Seite 712 (1951).
- Kirk-Othmer Encyclopedia of Chemical Technology, second edition, Vol.13, Seiten 578-579.

## Beschreibung

Die Erfindung betrifft ein Verfahren zur Herstellung eines Polymerisates des Tetrafluorethylens (TFE) in wäßriger Suspension, wie in den Patentansprüchen definiert.

Der Erfindung liegt die Aufgabe zugrunde, in einem absatzweise betriebenen Rührkessel ein Polymerisat des TFE in wäßriger Suspension mit möglichst hohem Umsatz herzustellen, wobei ein Granulat erhalten werden soll, das möglichst runde Körner und ein hohes Schüttgewicht aufweisen soll. Weiterhin sollen die bisher bekannten Verfahren zur Herstellung solcher Produkte vereinfacht werden.

Versuche, bei den bisher bekannten Verfahren den Umsatz zu steigern, stoßen insofern auf Schwierigkeiten, als sich das gebildete Polymer mit dem gasförmigen Monomer beladen kann und dann an der Oberfläche des Polymerisationsmediums aufschwimmt. Eine definierte Reaktionsführung ist damit erschwert, insbesondere die Abfuhr der Reaktionswärme aus der exothermen Polymerisation. Es besteht so die Gefahr lokaler Überhitzungen, die zur Sinterung des Polymeren und bis zur Zündung des zu Verpuffungen neigenden monomeren TFE führen können. Es besteht also die Aufgabe, die gebildeten Polymerpartikel in möglichst hoher Konzentration möglichst homogen in der wäßrigen Flotte zu suspendieren und sie, sofern sie aufschwimmen, von der Oberfläche wieder abzuziehen. Außerdem muß das Monomere aus dem Gasraum des Polymerisationskessels durch Einrühren und Dispergieren des Gases in der wäßrigen Flotte an den Reaktionsort gebracht werden. Diese Dispergierung des Gases in der Flotte soll möglichst homogen erfolgen. Außerdem muß die Abfuhr der Reaktionswärme gewährleistet sein. Eine weitere Aufgabe ist die Ausbildung eines möglichst runden und einheitlichen Polymerkorns mit hohem Schüttgewicht, das die Handhabung des Produkts bei den weiteren Aufarbeitungsschritten wie Trocknen und Mahlen erleichtert.

Aus der US-A 3 245 972 ist ein Verfahren zur Herstellung von Polytetrafluorethylen-(PTFE)-Formpulver durch Polymerisieren von TFE unter Rühren in Kontakt mit einem wäßrigen Medium bekannt. Bei einer bevorzugten Ausführungsform dieses Verfahrens erfolgt das Rühren mit einer gesteuerten Leistungszufuhr mit einer Leistungsaufnahme im Bereich von 0,0004 bis 0,002 mkg/sec/ml bei einem Verhältnis von Leistung zu Durchflußkoeffizient von mindestens 1,4. Von den diskutierten Rührertypen wird ein senkrecht angeordneter, flacher Paddelrührer mit einem Verhältnis von Leistung zu Durchflußkoeffizient von 3,4 bevorzugt. Weniger günstig sind Rührer mit flachen, in einem Winkel von 15° zur Horizontale angesetzten Flügeln, der nur ein Verhältnis von 1,45 aufweist, sowie eine Gasturbine mit einem Verhältnis von 1,65, ein Propellermischer mit einem Verhältnis von 1,60 und ein Flügelrührer mit horizontalen Scherrändern mit einem Verhältnis von 1,3.

Aus der US-A 3 462 401 ist ein ähnliches Verfahren bekannt, bei dem in Gegenwart einer nahezu wasserunlöslichen organischen Flüssigkeit mit einem Siedepunkt unterhalb von 150 °C, in deren Gegenwart eine Kettenübertragung nicht leicht stattfindet, polymerisiert wird. Es wird darauf hingewiesen, daß die Rührbedingungen geeignet zu wählen sind, was durch ankerartige Rührer, gegebenenfalls mit einem zusätzlichen weiteren Rührwerk mit propellerartigen Flügeln, das am Boden angebracht ist, oder mit einem propellerartigen Rührer mit vier Rührflügeln bewerkstelligt wird.

Mit diesen bekannten Verfahren kann die eingangs geschilderte Aufgabe nicht befriedigend gelöst werden.

Es wurde nun ein Verfahren zur Herstellung eines Polymerisats des TFE in wäßriger Suspension gefunden, das dadurch gekennzeichnet, daß man ein Rührorgan einsetzt, das neben einer axialen auch eine solche tangentiale Strömungskomponente erzeugt, gegebenenfalls durch Stromstörer,daß sich eine Trombe zumindest bis in die Nähe des Rührorgans ausbildet. Die axiale Komponente sorgt für die Durchmischung des Kesselinhalts und die homogene Suspendierung der Polymerteilchen in der wäßrigen Flotte. Zur Ausbildung einer symmetrischen Trombe ist die Rührerachse im wesentlichen senkrecht angeordnet.

Das Rührorgan ist vorzugsweise ein Schrägblattrührer, der zweckmäßig in Bodennähe des Reaktionskessels angebracht ist. Die durch das Rührorgan erzeugte Tangentialströmung wird vorzugsweise durch Stromstörer reduziert und zum Teil so in axiale Richtung umgelenkt, daß sich das gewünschte Rührbild einstellt. Diese Stromstörer erstrecken sich nicht - wie in der Verfahrenstechnik üblich - über die gesamte Füllhöhe des Reaktionskessels, sondern im wesentlichen auf den Bereich, in dem das Rührorgan angebracht ist.

Zweckmäßig werden im Bereich des Rührorgans zwei gegenüberliegende Stromstörer angeordnet, die vorteilhaft drehbar gestaltet sind.

Der Einsatz von Strombrechern dient üblicherweise dazu, die Ausbildung einer Trombe zu stören. Der Nachteil der bekannten Anordnung der Strombrecher liegt darin, daß "Totwasserzonen" auftreten, in denen das aufschwimmende Produkt zu großen Brocken zusammensintern kann. Weiterhin kann sich das Produkt an der Phasengrenze in einem solchen Ausmaß anstauen, daß es - vor allem nach einem Stillstand des Rührers - nicht wieder in die Flotte eingerührt werden kann.

Vorzugsweise arbeitet man nach dem aus der US-A 5 153 285 bekannten Verfahren zur Herstellung von granularem, aus der Schmelze nicht verarbeitbarem TFE-Polymerisat durch Suspensionspolymerisation von TFE und 0 bis 0,6 Mol-% eines modifizierenden Comonomeren in wäßriger Phase in Gegenwart radikalbildender Initiatoren, wobei vor Beginn der Polymerisation eine Mischung von TFE und Inertgas, beispielsweise Edelgase wie Argon, Kohlendioxid, Perfluormethan oder -ethan, insbesondere aber Stickstoff, aufgepreßt wird. Dieses Verfahren ist dadurch gekennzeichnet, daß der Gesamtdruck der aufgepreßten Mischung 5 bis 50 bar, vorzugsweise 5 bis 30 bar, beträgt und die Konzentration des TFE in dieser Mischung 30 bis 70 Mol-% beträgt, wobei die besagte Konzentration durch entsprechende Nachspeisung von TFE während der Polymerisation in diesem Bereich gehalten wird. Bevorzugte Ausführungsformen bestehen darin, daß TFE während der Polymerisation im wesentlichen im Ausmaß des Verbrauchs beziehungsweise so nachgespeist wird, daß der Gesamtdruck im wesentlichen konstant bleibt.

Die Erfindung bringt eine Reihe von Vorteilen mit sich: Bezogen auf das Polymerisationsmedium können im Vergleich zur üblichen Suspensionspolymerisation von TFE bis zu etwa 25 % mehr TFE umgesetzt werden, wobei man zu einem Feststoffanteil von bis zu 60 kg/100 l Medium kommt. Die Raum-Zeit-Ausbeute steigt dadurch erheblich an.

Die Erzielung hoher Schüttgewichte kann beispielsweise nach den Verfahren der US-A 4 379 900 durch den Einsatz von 0,004 bis 0,075 Mol-% an einpolymerisierten Einheiten eines Perfluoralkylvinylethers erreicht werden. Nach dem Verfahren der US-A 3 245 972 werden hohe Schüttgewichte dadurch erzielt, daß die Polymerisation unter Teilchenvergrößerung vorgelegter Keime durchgeführt wird. Erfindungsgemäß können hohe Schüttgewichte ohne derartige Maßnahmen erhalten werden: Wird unter vergleichbaren Bedingungen unter Beibehaltung eines mittleren Korndurchmessers von 1100 µm nach dem Verfahren der US-A 3 245 972 gearbeitet, so erhält man ein Schüttgewicht von 400 g/l, während erfindungsgemäß ein Schüttgewicht von 500 g/l erhalten wird.

Ein weiterer großer Vorteil der Erfindung besteht in der Sicherheit, da auch bei einem um 25 % gesteigerten TFE-Umsatz die Wärme sicher abgeführt wird und jederzeit - auch nach einem Stillstand des Rührers - das aufschwimmende Polymerisat sicher wieder homogenisiert werden kann. Außerdem wird die Bildung grober Teilchen vermieden. Man erhält vielmehr ein einheitliches, kompaktes und kugelförmiges Korn mit einem stark verringerten Anteil an faserförmigen Partikeln.

Die Erfindung wird in den folgenden Beispielen näher erläutert.

### Beispiel 1

In einen Edelstahlkessel mit einem Fassungsvermögen von 1 800 000 Teilen des Polymerisationsmediums Wasser, ausgestattet mit einem vertikalen Schrägblattrührer (Blatt mit 45° Neigung zur Achse, so angeordnet, daß sich die Unterkante des Rührorgans auf circa 30 % der Füllhöhe des Kessels befindet) und zwei gegenüberstehenden drehbaren Stromstörern, die sich an der Kesselwand mit einem Abstand von circa 5 % des Kesseldurchmessers von der Unterkante des Rührblatts bis circa 80 % der Füllhöhe des Kessels erstrecken, werden 1 000 000 Teile entionisiertes Wasser und darin gelöst 15 Teile Ammoniumoxalat eingefüllt. Der Kessel wird durch abwechselndes Evakuieren und Spülen mit nachgereinigtem Stickstoff von Sauerstoff befreit und die Temperatur auf 15 °C eingestellt. Sodann werden nacheinander 7 bar Stickstoff und 6 bar TFE entsprechend einem Gesamtdruck von 13 bar aufgepreßt. Die Polymerisation wird nach Anstellen des Rührers durch einmaliges Zudosieren von 2 Teilen KMnO₄, in 2500 Teilen entgastem Wasser gelöst, in Gang gebracht. TFE wird während der Polymerisation ständig zugeführt, und zwar so, daß die Konzentration an TFE in dem sich durch das entstehende Polymerisat verkleinernden Gasraum im Kessel im wesentlichen nicht geändert wird. Dies wird dadurch erreicht, daß man den Sollwert des TFE-Druckreglers entsprechend der Gasvolumenabnahme stufenweise erhöht. Die Gasvolumenabnahme errechnet sich aus der in den Kessel eingeströmten und integrierend gemessenen TFE-Menge und der Dichte (ρ ≈ 2,3 g/cm³) des gebildeten PTFE. Dadurch wird also der Gesamtdruck während der Polymerisation ständig erhöht. Wenn die TFE-Einfahrmenge von 600 000 Teilen erreicht wird, beträgt der Gesamtdruck etwa das 1,33fache des Anfangsdruckes. Nach Erreichen der genannten Einfahrmenge von 600 000 Teilen TFE wird die Polymerisation durch Schließen des TFE-Ventils und Druckentlastung beendet.

Der Kessel wird mehrmals mit N₂ gespült und dadurch das Polymerisat entgast. Über ein Sieb wird die Suspension vom Wasser grob getrennt. Das Rohpolymerisat wird bei 220 °C in einem Stromtrockner getrocknet. Es hat einen mittleren Korndurchmesser von 1100 µm und ein Schüttgewicht von 500 g/l.

### Vergleichsbeispiel

Verfährt man nach Beispiel 1, jedoch unter Einsatz eines Ankerrührers, dann schwimmt nach Zufuhr von 480 000 Teilen TFE das Produkt in einem solchen Maße auf, daß es zunehmend zusammensintert. Die Polymerisation muß deshalb bei diesem Umsatz abgebrochen werden.

Das Produkt hat ebenfalls einen mittleren Korndurchmesser von 1100 µm, aber ein Schüttgewicht von nur 400 g/l.

## Patentansprüche

1. Verfahren zur Herstellung eines Polymerisats des Tetrafluorethylens in wäßriger Suspension, dadurch gekennzeichnet, daß man ein Rührorgan einsetzt, das neben einer axialen auch eine solche tangentiale Strömungskomponente erzeugt, gegebenenfalls durch Stromstörer, daß sich eine Trombe zumindest bis in die Nähe des Rührorgans ausbildet.

2. Verfahren nach Anspruch 1, dadurch gekennzeichnet, daß das Rührorgan ein Schrägblattrührer ist.

3. Verfahren nach Anspruch 1 oder 2, dadurch gekennzeichnet, daß das Rührorgan in Bodennähe des Polymerisationskessels angeordnet ist.

4. Verfahren nach einem oder mehreren der vorhergehenden Ansprüche, dadurch gekennzeichnet, daß im Bereich des Rührorgans Stromstörer angebracht sind, die sich nur über einen Teil der Füllhöhe des Reaktionskessels erstrecken.

5. Verfahren nach Anspruch 4, dadurch gekennzeichnet, daß zwei gegenüberliegende Stromstörer angebracht sind.

6. Verfahren nach Anspruch 4 oder 5, dadurch gekennzeichnet, daß die Stromstörer drehbar angeordnet sind.

## Claims

1. A process for preparing a polymer of tetrafluoroethylene in aqueous suspension, wherein a stirrer element is used which, in addition to an axial flow component, also generates a tangential flow component, optionally by baffles, such that a cone forms at least as far as the vicinity of the stirrer element.

2. The process as claimed in claim 1, wherein the stirrer element is an inclined-blade stirrer.

3. The process as claimed in claim 1 or 2, wherein the stirrer element is arranged in the vicinity of the base of the polymerization reactor.

4. The process as claimed in one or more of the preceding claims, wherein in the region of the stirrer element baffles are mounted which extend only over part of the filling height of the reactor.

5. The process as claimed in claim 4, wherein two baffles are mounted opposite one another.

6. The process according to claim 4 or 5, wherein the baffles are arranged so as to be rotatable.

## Revendications

1. Procédé de préparation d'un polymère de tétrafluoroéthylène en suspension aqueuse caractérisé en ce qu'on utilise un mobile d'agitation qui provoque outre une composante de débit axial également une telle composante de débit tangentiel, éventuellement à l'aide d'un réducteur du flux, de manière qu'une trombe se forme au moins jusqu'à la proximité du mobile d'agitation.

2. Procédé selon la revendication 1, caractérisé en ce que le mobile d'agitation est un agitateur à pales en biais.

3. Procédé selon la revendication 1 ou 2, caractérisé en ce que le mobile d'agitation est disposé à la proximité du fond du réacteur de polymérisation.

4. Procédé selon une ou plusieurs des revendications précédentes caractérisé en ce que, dans la zone du mobile d'agitation, sont installés des réducteurs du flux qui ne s'étendent que sur une partie de la hauteur de remplissage du réacteur.

5. Procédé selon la revendication 4, caractérisé en ce que deux réducteurs du flux sont installés face à face.

6. Procédé selon la revendication 4 ou 5, caractérisé en ce que les réducteurs du flux sont installés de façon pivotante.
